# EUROPEAN PATENT APPLICATION

(11) **EP 3 918 922 A1**
(43) Date of publication of application: **08.12.2021**
(21) Application number: 20748788.5
(22) Date of filing: 31.01.2020
(51) Int. Cl.: A23L 5/00, A23G 3/34, A23L 2/39, A23L 2/02, A23L 2/52

(54) **CACAO PULP JUICE DRIED POWDER, FOOD PRODUCT IN WHICH SAME IS BLENDED, AND METHODS FOR PRODUCING THESE**

(30) Priority: 01.02.2019 JP 2019016894
(71) Applicant: MEIJI CO., LTD, Chuo-ku Tokyo 104-8306 (JP)
(72) Inventor: MIZUMURA, Shunsuke, Hachioji-shi, Tokyo 192-0919 (JP); KITASHIMA, Masaki, Hachioji-shi, Tokyo 192-0919 (JP)
(74) Representative: TBK
(86) International application number: PCT/JP2020/003705
(87) International publication number: WO 2020/158927

(57) **Abstract**

The present invention aims to provide a lyophilized powder of a cacao pulp juice, and a food containing the powder, and to provide a method of producing a lyophilized powder of a cacao pulp juice and a method of producing a food containing a cacao pulp juice. The present invention provides a lyophilized powder of a cacao pulp juice including a dietary fiber component and an oil or fat component, and a food including the lyophilized powder of the present invention. The present invention also provides a method of producing a cacao pulp juice powder, the method including the step of subjecting a cacao pulp juice base containing a dietary fiber component and an oil or fat component to lyophilization treatment, and a method of producing a food containing a cacao pulp juice, the method including the step of mixing the lyophilized powder of the present invention with another/other raw material(s). The food of the present invention can be provided as oil or fat-based confectionery.

## Description

### CROSS-REFERENCE TO RELATED APPLICATIONS

The present application enjoys the benefit of priority from the prior Japanese Patent Application No. 2019-16894 (filing date: February 1, 2019), the entire disclosure of which is incorporated herein by reference.

### TECHNICAL FIELD

The present invention relates to a lyophilized powder of a cacao pulp juice, and a food containing the powder, and to methods of producing the same.

### BACKGROUND ART

A cacao fruit (cacao pod) has a rugby ball-like shape with a length of about 20 cm, and has a hard-shell cover with a thickness of not less than 1 cm. A cacao pod contains 30 to 40 seeds, that is, cacao beans, surrounded with sweet white pulp called cacao pulp. The cacao beans are processed through natural fermentation and a drying step into a cacao mass, which is used as a raw material of chocolate, cocoa, and the like.

Cacao pulp is naturally fermented together with cacao beans for adding taste to cacao beans. In recent years, however, squeezed juice of cacao pulp (cacao pulp juice) removed separately from cacao beans is attracting attention as a fruit juice. Cacao pulp juice has a fruity flavor as well as fresh sourness and subtle sweetness.

Although a food composition containing cacao pulp has been known (Patent Document 1), there has been no report of a case where cacao pulp juice was processed into a powder and added to a food.

### Reference List

### Patent Document

Patent Document 1: WO 2017/062603

### SUMMARY OF THE INVENTION

For utilization of cacao pulp juice as a food raw material, the present inventors attempted preparation of a dry powder therefrom, but the preparation of the dry powder was found to be difficult. As a result of intensive study of the preparation of a dry powder, the present inventors found that the dry powder can be prepared by using a cacao pulp juice containing dietary fiber and oil or fat, and that the resulting dry powder has excellent powder properties and low hygroscopicity. The present inventors also found that a processed food containing the resulting cacao pulp juice powder has excellent taste and flavor derived from the cacao pulp juice, and low hygroscopicity. The present invention is based on these findings.

Specifically, an object of the present invention is to provide a lyophilized powder of a cacao pulp juice, and a food containing the powder. Another object of the present invention is to provide a method of producing the lyophilized powder and a method of producing a food containing a cacao pulp juice.

According to the present invention, the following inventions are provided.
[1] A lyophilized powder of a cacao pulp juice, comprising a dietary fiber component and an oil or fat component.
[2] The lyophilized powder according to [1], wherein the dietary fiber component is one or more selected from the group consisting of cacao-derived dietary fiber, dextrin, and apple-derived dietary fiber.
[3] The lyophilized powder according to [1] or [2], wherein the oil or fat component is one or more selected from the group consisting of a cocoa powder-derived oil or fat component, cocoa butter, liquid vegetable oil or fat, solid vegetable oil or fat, and solid animal oil or fat.
[4] A food comprising the lyophilized powder according to any one of [1] to [3].
[5] The food according to [4], which is oil or fat-based confectionery.
[6] A method of producing a lyophilized powder of a cacao pulp juice, the method comprising the step of subjecting a cacao pulp juice base containing a dietary fiber component and an oil or fat component to lyophilization treatment.
[7] The production method according to [6], wherein the dietary fiber component is one or more selected from the group consisting of cacao-derived dietary fiber, dextrin, and apple-derived dietary fiber.
[8] The production method according to [6] or [7], wherein the oil or fat component is one or more selected from the group consisting of a cocoa powder-derived oil or fat component, cocoa butter, liquid vegetable oil or fat, solid vegetable oil or fat, and solid animal oil or fat.
[9] The production method according to any one of [6] to [8], wherein the cacao pulp juice base comprises at least a cacao pulp juice and a cocoa powder as raw materials.
[10] The production method according to any one of [6] to [9], wherein the cacao pulp juice base comprises at least a cacao pulp juice, a cocoa powder, and oil or fat as raw materials.
[11] The production method according to [10], wherein the oil or fat is one or more selected from the group consisting of cocoa butter, liquid vegetable oil or fat, solid vegetable oil or fat, and solid animal oil or fat.
[12] A method of producing a food containing a cacao pulp juice, the method comprising the step of mixing the lyophilized powder according to any one of [1] to [5], or a lyophilized powder of a cacao pulp juice produced by the production method according to any one of [6] to [11], with another/other raw material(s).
[12-1] A method of producing a food containing a cacao pulp juice, the method comprising the step of producing a lyophilized powder of a cacao pulp juice by carrying out the production method according to any one of [6] to [11], and mixing the resulting powder with another/other raw material(s).
[13] The production method according to [12] or [12-1], wherein the food is oil or fat-based confectionery.
[14] A method of improving physical properties of a lyophilized powder of a cacao pulp juice, the method comprising the step of including dietary fiber and oil or fat in a cacao pulp juice before lyophilization.
[15] The method according to [14], wherein a cocoa powder is added as the dietary fiber and the oil or fat.

According to the present invention, a cacao pulp juice dry powder, of which production has so far been difficult, and a food using the powder can be provided.

### DETAILED DESCRIPTION OF THE INVENTION

### Lyophilized Powder and Production Method Thereof

The lyophilized powder of the present invention is based on a cacao pulp juice, and characterized in that it comprises at least a dietary fiber component and an oil or fat component.

The dietary fiber component in the present invention is not limited as long as it is a dietary fiber component acceptable as a food. Examples of the dietary fiber component include cacao-derived dietary fiber, dextrin, and apple-derived dietary fiber. The dietary fiber component is preferably cacao-derived dietary fiber (more preferably, cocoa powder-derived dietary fiber or cacao pulp-derived dietary fiber). In the present invention, one or more selected from the above components may be included as a dietary fiber component(s) in the lyophilized powder.

The oil or fat component in the present invention is not limited as long as it is an oil or fat component acceptable as a food. Examples of the oil or fat component include a cocoa powder-derived oil or fat component, cocoa butter, liquid vegetable oil or fat, solid vegetable oil or fat, and solid animal oil or fat. The oil or fat component is preferably a cocoa powder-derived oil or fat component, cocoa butter, liquid vegetable oil or fat, or solid vegetable oil or fat, more preferably a cocoa powder-derived oil or fat component, cocoa butter, or liquid vegetable oil or fat, still more preferably a cocoa powder-derived oil or fat component or cocoa butter. In the present invention, one or more selected from the above components may be included as an oil or fat component(s) in the lyophilized powder.

The lyophilized powder of the present invention may contain an emulsifier, a sugar, a milk powder, a starch syrup, a fruit pulp, a flavor, a sweetener, an acidulant, or the like in addition to the dietary fiber component and the oil or fat component.

The lyophilized powder of the present invention can be produced by subjecting a cacao pulp juice base containing at least a dietary fiber component and an oil or fat component to lyophilization treatment.

The cacao pulp juice base in the present invention is a raw material to be subjected to the lyophilization treatment, and is a composition containing a cacao pulp juice as a main raw material. The term "cacao pulp juice" herein is meant to include a squeezed juice of cacao pulp (fruit pulp) removed from a cacao pod (fruit body of cacao), and the term is meant to include a clarified cacao pulp juice and an unclarified cacao pulp juice. The "clarified cacao pulp juice" means a cacao pulp juice that has been subjected to clarification treatment such as centrifugation, filtration, or membrane treatment. The unclarified cacao pulp juice means a cacao pulp juice that has not been subjected to the above clarification treatment, and includes a cacao pulp puree.

The cacao pulp juice for use as a raw material in the present invention may be used without concentration or dilution. Even a concentrated cacao pulp juice may be used after dilution to an extent at which lyophilization treatment is possible.

The content of the dietary fiber component in the whole cacao pulp juice base is not limited as long as powderization of the cacao pulp juice is possible. The lower limit may be 0.8% by mass, 1.1% by mass, or 1.6% by mass, and the upper limit may be 50% by mass or 30% by mass. The above lower limit and the above upper limit may be arbitrarily combined, and the range of the content may be, for example, 0.8 to 50% by mass (preferably 1.1 to 30% by mass or 1.6 to 30% by mass).

The dietary fiber content is represented as the total amount of water-soluble dietary fiber and insoluble dietary fiber. The dietary fiber content may be measured by the enzymatic-gravimetric method (Prosky method). Specifically, the dietary fiber content may be measured according to the method described in "8 Dietary Fiber (1) Prosky Method (Enzymatic-Gravimetric Method)" in "Attached Document: Analysis Methods, etc. for Nutrients, etc.", which corresponds to the details of the method presented in the third column of appendix 9 of Nutritional Labeling Standards (Cabinet Office Ordinance No 10, issued in 2015) (http://www.caa.go.jp/policies/policy/food_labeling/food_labeling_act/pdf/foods_index _18_180119_0003.pdf).

The content of the oil or fat component in the whole cacao pulp juice base is not limited as long as powderization of the cacao pulp juice is possible. The lower limit may be 0.12% by mass, 0.26% by mass, 0.55% by mass, 1.10% by mass, 4.10% by mass, 4.60% by mass, 6.10% by mass, or 8.10% by mass, and the upper limit may be 50% by mass, 20% by mass, or 10% by mass. The above lower limit and the above upper limit may be arbitrarily combined, and the range of the content may be, for example, 0.12 to 50% by mass (preferably 0.26 to 20% by mass or 1.10 to 10% by mass).

The content of the oil or fat component may be measured according to the method described in "2 Lipid (4) Acid Decomposition Method" in "Attached Document: Analysis Methods, etc. for Nutrients, etc.", which corresponds to the details of the method presented in the third column of appendix 9 of Nutritional Labeling Standards (Cabinet Office Ordinance No 10, issued in 2015) (http://www.caa.go.jp/policies/policy/food_labeling/food_labeling_act/pdf/foods_index _18_180119_0003.pdf).

The cacao pulp juice base may contain an emulsifier, a sugar, a milk powder, a starch syrup, a fruit pulp, a flavor, a sweetener, an acidulant, or the like in addition to the dietary fiber component and the oil or fat component.

The content of the emulsifier in the whole cacao pulp juice base is not limited as long as powderization of the cacao pulp juice is possible. The lower limit may be 0% by mass, 0.2% by mass, or 0.5% by mass, and the upper limit may be 2% by mass or 3% by mass. The above lower limit and the above upper limit may be arbitrarily combined, and the range of the content may be, for example, 0 to 3% by mass (preferably 0.2 to 2% by mass or 0.5 to 2% by mass).

In the present invention, the raw materials contained in the cacao pulp juice base are not limited as long as the cacao pulp juice base contains the dietary fiber component and the oil or fat component as well as the cacao pulp juice. For example, since a cocoa powder contains dietary fiber and an oil or fat component, a cocoa powder may be added to a cacao pulp juice (especially a clarified cacao pulp juice) to provide a cacao pulp juice base, or a cocoa powder and oil or fat may be added to a cacao pulp juice (especially a clarified cacao pulp juice) to provide a cacao pulp juice base. Alternatively, since an unclarified cacao pulp juice contains cacao pulp, which is dietary fiber, oil or fat may be added to an unclarified cacao pulp juice to provide a cacao pulp juice base. Examples of the oil or fat to be added to the cacao pulp juice herein include cocoa butter, liquid vegetable oil or fat, solid vegetable oil or fat, and solid animal oil or fat. One or more of the above examples may be used. In any case, a component(s) such as an emulsifier, a sugar, a milk powder, a starch syrup, a fruit pulp, a flavor, a sweetener, an acidulant, or the like may be added to the cacao pulp juice base.

In cases where a cocoa powder is added as a raw material to a clarified cacao pulp juice to provide a cacao pulp juice base, the content of the cocoa powder in the whole cacao pulp juice base is not limited as long as powderization of the cacao pulp juice is possible. The lower limit may be 1.2% by mass, 2.5% by mass, or 5% by mass, and the upper limit may be 30% by mass, 15% by mass, or 10% by mass. The above lower limit and the above upper limit may be arbitrarily combined, and the range of the content may be, for example, 1.2 to 30% by mass (preferably 2.5 to 15% by mass or 5 to 10% by mass).

In cases where a cocoa powder and oil or fat are added as raw materials to a clarified cacao pulp juice to provide a cacao pulp juice base, the content of the oil or fat in the whole cacao pulp juice base is not limited as long as powderization of the cacao pulp juice is possible. The lower limit may be 3% by mass, 5% by mass, or 7% by mass, and the upper limit may be 50% by mass or 20% by mass. The above lower limit and the above upper limit may be arbitrarily combined, and the range of the content may be, for example, 3 to 50% by mass (preferably 5 to 50% by mass or 7 to 20% by mass).

In the present invention, the cacao pulp juice base may be prepared by mixing together the raw materials such that the resulting mixture is in the state of an emulsion (O/W). For example, the cacao pulp juice base may be prepared by mixing together the raw material other than the cacao pulp juice, adding the cacao pulp juice to the resulting mixture, and then emulsifying (O/W) the resulting mixture. The emulsified state herein means a state where the cacao pulp juice base prepared by mixing the raw materials shows a uniformly mixed external appearance without separation.

In the production method of the present invention, the resulting cacao pulp juice base is subjected to lyophilization treatment. The lyophilization treatment may be carried out according to a conventional method. The lyophilization treatment of the cacao pulp juice base may be carried out, for example, under conditions at 25°C to 50°C (shelf temperature) for 20 hours to 40 hours.

According to the present invention, there is provided a lyophilized powder of a cacao pulp juice. Regarding the raw materials used in food processing, powder products are often advantageous over liquid products in some aspects from the viewpoint of preservation, transportation, weighing, handling, less restriction of compounding manner, and the like. Thus, the present invention contributes to industrial production of foods containing a cacao pulp juice.

### Food and Production Method Thereof

According to the present invention, there is provided a food containing the lyophilized powder of the present invention. The content of the lyophilized powder of the present invention in the food of the present invention may be appropriately determined depending on the extent to which the flavor and the taste of the cacao pulp juice are to be given to the food. The content in the whole food may be 1 to 95% by mass (preferably 5 to 85% by mass or 5 to 50% by mass). The content of the lyophilized powder of the present invention in the oil or fat-based confectionery of the present invention may be 5 to 50% by mass (preferably 10 to 40% by mass or 15 to 40% by mass) in the whole oil or fat-based confectionery.

According to the present invention, there is provided a method of producing a food containing a cacao pulp juice is provided. The food of the present invention may be prepared in the same manner as a conventional method except that the lyophilized powder of the present invention is added to another/other raw material(s). Specifically, the present invention provides a method of producing a food containing a cacao pulp juice, the method comprising the step of producing a cacao pulp juice powder by the production method of the present invention, and mixing the resulting powder with another/other raw material(s).

Examples of the food provided by the present invention include oil or fat-processed foods such as foods containing cacao beans as a main raw material, like chocolate. The term "oil or fat-processed foods" herein is meant to include oil or fat-based confectionery obtained by a process using cacao mass, cocoa powder, cocoa butter, oil or fat, or the like. The term "oil or fat-based confectionery" herein is meant to include not only chocolate, quasi chocolate, and chocolate products defined in the Fair Competition Code Concerning Labeling on Chocolates, which is a rule approved by the Fair Trade Commission of Japan, but also all types of oil or fat-based confectionery that do not satisfy the rule, such as tempered-type or non-tempered-type fat creams and chocolates using a cacao butter equivalent. In the present invention, the oil or fat-based confectionery may be prepared in the same manner as a conventional method except that the lyophilized powder of the present invention is added. For example, the oil or fat-based confectionery of the present invention may be produced by mixing the lyophilized powder of the present invention with a raw material(s) of the oil or fat-based confectionery, and then subjecting the resulting mixture to a refining (pulverization) process using a roll mill, a conching process, if necessary, a tempering process, a molding process, an aging process, and the like.

The food provided by the present invention is not limited to oil or fat-processed foods as long as the food can contain the lyophilized powder of the present invention. Examples of the food include starch-based foods such as breads, biscuits, noodles, crackers, and nutritional supplement bars; confectioneries such as candies, gums, gummies, and snacks; water-based confectioneries such as cake dough; milks and dairy products, such as cow milk, processed milk, ice creams, fermented milks (such as yogurt), milk beverages, cheeses, butters, and creams; beverages such as vegetable beverages, fruit juice beverages, and soft drinks; desserts such as pudding, jelly, bavarois, and mousse; processed fruit products such as jam and puree; and seasonings such as roux and sauces. The lyophilized powder of the present invention may be added appropriately in an appropriate timing during the production step depending on the properties of the food and the purpose.

The food (especially oil or fat-based confectionery) of the present invention had a fruity flavor in addition to a fresh sourness and a moderate sweetness unique to cacao pulp juice, and was found to be a food having a taste and a flavor that have not been achieved before. In particular, since the present invention achieved powderization of cacao pulp juice, production of a food containing a large amount of cacao pulp juice has become possible. Thus, the present invention is advantageous in that a food having an enhanced taste and flavor of cacao pulp juice can be provided.

### Method of Improving Physical Properties

According to the present invention, a method of improving physical properties of a lyophilized powder of a cacao pulp juice, the method comprising the step of including dietary fiber and oil or fat in a cacao pulp juice before lyophilization, is provided. The physical properties improved by the method of the present invention are, for example, physical properties required for a dry powder (especially a dry powder for use as a food raw material), such as fluidity, hygroscopicity, and pulverization processability. The improvement method of the present invention can be carried out according to the descriptions on the lyophilized powder of the present invention and the production method thereof.

### EXAMPLES

The present invention is described more concretely by way of the following examples. However, the present invention is not limited to these examples. In the Examples, "cacao pulp juice" is simply referred to as "cacao juice".

### Example 1: Production of Cacao Juice Powder

Cacao juice bases were prepared using the raw materials described in Table 1. Specifically, the raw materials described in Table 1 other than the clarified cacao juice were mixed together using a mixer. The clarified cacao juice was added to, and mixed with, the resulting mixture. A cacao juice base was prepared such that an emulsified state (O/W) was finally achieved. Each cacao juice base prepared was placed in a transparent bag, and frozen in a freezer, followed by being left to stand overnight. Thereafter, vacuum lyophilization treatment was carried out using a lyophilizer, to obtain a lyophilized powder. The vacuum lyophilization treatment was carried out under conditions at 40°C (shelf temperature) for 25 hours.

The clarified cacao juice was prepared by removing the fiber content from a cacao juice using a bag-filter filtration treatment. The Brix value of the clarified cacao juice was 19.4. While the clarified cacao juice contained 0.5% by mass dietary fiber (as measured by the enzymatic-gravimetric method (Prosky method)), it hardly contained an oil or fat component (less than 0.1% by mass, as measured by the acid decomposition method).

**[Table 1]**

| Table 1: Components of cacao juice bases, and compositions in terms of the dietary | | | | | | | | |
|---|---|---|---|---|---|---|---|---|
| fiber component and the oil/fat-based component | | | | | | | | |
| Component (parts by mass) | Control section 1 | Test section 1 | Test section 2 | Test section 3 | Test section 4 | Test section 5 | Test section 6 | Test section 7 |
| Clarified cacao juice | 100 | 95 | 92 | 90 | 88 | 92 | 92 | 91.5 |
| Cocoa powder | 0 | 5 | 5 | 5 | 5 | 5 | 5 | 5 |
| Cocoa butter | 0 | 0 | 3 | 5 | 7 | 0 | 0 | 3 |
| Fat equivalent (solid) | 0 | 0 | 0 | 0 | 0 | 3 | 0 | 0 |
| Fat equivalent (liquid) | 0 | 0 | 0 | 0 | 0 | 0 | 3 | 0 |
| Emulsifier | 0 | 0 | 0 | 0 | 0 | 0 | 0 | 0.5 |
| Total | 100 | 100 | 100 | 100 | 100 | 100 | 100 | 100 |
| Dietary fiber component | 0.5 | 1.68 | 1.66 | 1.65 | 1.64 | 1.66 | 1.66 | 1.66 |
| Oil/fat component | 0 | 1.10 | 4.10 | 6.10 | 8.10 | 4.10 | 4.10 | 4.60 |

| | | | | | | | | |
|---|---|---|---|---|---|---|---|---|
| ^{∗}The cocoa powder contains 24% by mass dietary fiber and 22% by mass cocoa butter. ^{∗}A cocoa butter equivalent was used as the fat equivalent (solid), and a salad oil was used as the fat equivalent (liquid). | | | | | | | | |

Each lyophilized powder obtained was subjected to quality evaluation according to the following standards regarding "dry powder preparation", "powder physical properties", "hygroscopicity", "re-pulverization properties", and "comprehensive evaluation".

The "dry powder preparation" was evaluated in terms of whether or not a lyophilized powder can be prepared in the present Example. In the case where preparation of a dry powder was possible, the lyophilized powder was rated as "possible", while in the case where the preparation was impossible, the lyophilized powder was rated as "impossible".

The "powder physical properties" (fluidity) were evaluated in terms of the properties of the powder immediately after the preparation of the powder by lyophilization, which evaluation was carried out by touching with fingers. In the evaluation, scoring was carried out as follows: loose powder, 5 points; rather coarse powder, 4 points; coarse, but good powder, 3 points; rather sticky powder, 2 points; sticky powder, 1 point.

Regarding the "hygroscopicity", the powder prepared by lyophilization was left to stand at room temperature/normal temperature for 60 minutes, and then the state of moisture absorption was evaluated by visual observation. In the evaluation, scoring was carried out as follows: powder not showing moisture absorption (absence of deliquescence), 5 points; rather hygroscopic powder, 4 points; hygroscopic, but still good powder, 3 points; hygroscopic powder showing some consolidation, 2 points; hygroscopic powder showing complete consolidation, 1 point.

Regarding the "re-pulverization properties" (pulverization processability), the powder prepared by lyophilization was enclosed in a wrapping material, and whether or not the powder is broken in the wrapping material by its own weight or application of a weak external impact was evaluated by visual observation. In the evaluation, scoring was carried out as follows: powder whose re-pulverization is extremely easy, 5 points; powder whose re-pulverization is easy, 4 points; powder whose re-pulverization is possible, 3 points; powder whose re-pulverization is rather difficult, 2 points; powder whose re-pulverization is difficult, 1 point.

The "comprehensive evaluation" was carried out by evaluating the obtained dry powder from the viewpoint of the quality required as a food processing raw material. In the evaluation, scoring was carried out as follows: extremely good powder, 5 points; very good powder, 4 points; fairly good powder, 3 points; rather poor powder, 2 points; poor powder, 1 point.

The quality evaluation results were as shown in Table 2.

### [Table 2]

**Table 2: Quality evaluation results**

| Evaluation item | Control section 1 | Test section 1 | Test section 2 | Test section 3 | Test section 4 | Test section 5 | Test section 6 | Test section 7 |
|---|---|---|---|---|---|---|---|---|
| Dry powder preparation | Impossible | Possible | Possible | Possible | Possible | Possible | Possible | Possible |
| Powder physical properties | - | 3 | 5 | 5 | 5 | 5 | 4 | 5 |
| Hygroscopicity | - | 3 | 4.5 | 4.5 | 4.5 | 4.5 | 4 | 4.5 |
| Re-pulverization properties | - | 3 | 5 | 5 | 5 | 5 | 4.5 | 5 |
| comprehensive evaluation | - | 3 | 5 | 4.5 | 4.5 | 5 | 4 | 5 |

As is evident from the results in Table 2, preparation of a dry powder was impossible when only the cacao juice was used (control section 1). However, preparation of a dry powder of the cacao juice has become possible by adding a cocoa powder (test section 1). Furthermore, each cacao juice containing not only the cocoa powder, but also cocoa butter as oil or fat showed a tendency of improvement in the evaluation items of "powder physical properties", "hygroscopicity", "re-pulverization properties", and "comprehensive evaluation" (test sections 2 to 4 and 7), and this tendency was also found in cases where oil or fat other than cocoa butter was used (test sections 5 and 6).

### Example 2: Production of Chocolates Containing Cacao Juice Powder

Using a cacao juice powder produced in Example 1, oil or fat-based confectionery (chocolate) was produced. First, using the raw materials described in Table 3, a chocolate base was prepared by a conventional method. Subsequently, the chocolate base obtained was filled into a mold, and then solidified by cooling. The chocolate base was then removed from the mold to obtain oil or fat-based confectionery (chocolate).

**[Table 3]**

| Raw materials of chocolates | | | |
|---|---|---|---|
| Raw material (parts by mass) | Bitter type 1 | Bitter type 2 | Milk type |
| Dry powder (Example 1, Test section 2) | 37 | 37 | 37 |
| Cacao mass | 37 | 36.5 | 28.5 |
| Cocoa butter | 26 | 26 | 26 |
| Whole milk powder | | | 8 |
| Emulsifier (lecithin) | - | 0.5 | 0.5 |
| Total | 100 | 100 | 100 |

The oil-based confectionery (chocolate) obtained had good mouth-melting properties and a good mouthfeel, and a high-quality feeling of cacao. Moreover, it had a pleasant sweetness and sourness unique to cacao juice. Further, the oil-based confectionery (chocolate) obtained was found to have low hygroscopicity.

## Claims

1. A lyophilized powder of a cacao pulp juice, comprising a dietary fiber component and an oil or fat component.

2. The lyophilized powder according to claim 1, wherein the dietary fiber component is one or more selected from the group consisting of cacao-derived dietary fiber, dextrin, and apple-derived dietary fiber.

3. The lyophilized powder according to claim 1 or 2, wherein the oil or fat component is one or more selected from the group consisting of a cocoa powder-derived oil or fat component, cocoa butter, liquid vegetable oil or fat, solid vegetable oil or fat, and solid animal oil or fat.

4. A food comprising the lyophilized powder according to any one of claims 1 to 3.

5. The food according to claim 4, which is oil or fat-based confectionery.

6. A method of producing a lyophilized powder of a cacao pulp juice, the method comprising the step of subjecting a cacao pulp juice base containing a dietary fiber component and an oil or fat component to lyophilization treatment.

7. The production method according to claim 6, wherein the dietary fiber component is one or more selected from the group consisting of cacao-derived dietary fiber, dextrin, and apple-derived dietary fiber.

8. The production method according to claim 6 or 7, wherein the oil or fat component is one or more selected from the group consisting of a cocoa powder-derived oil or fat component, cocoa butter, liquid vegetable oil or fat, solid vegetable oil or fat, and solid animal oil or fat.

9. The production method according to any one of claims 6 to 8, wherein the cacao pulp juice base comprises at least a cacao pulp juice and a cocoa powder as raw materials.

10. The production method according to any one of claims 6 to 9, wherein the cacao pulp juice base comprises at least a cacao pulp juice, a cocoa powder, and oil or fat as raw materials.

11. The production method according to claim 10, wherein the oil or fat is one or more selected from the group consisting of cocoa butter, liquid vegetable oil or fat, solid vegetable oil or fat, and solid animal oil or fat.

12. A method of producing a food containing a cacao pulp juice, the method comprising the step of mixing the lyophilized powder according to any one of claims 1 to 5, or a lyophilized powder of a cacao pulp juice produced by the production method according to any one of claims 6 to 11, with another/other raw material(s).

13. The production method according to claim 12, wherein the food is oil or fat-based confectionery.

14. A method of improving physical properties of a lyophilized powder of a cacao pulp juice, the method comprising the step of including dietary fiber and oil or fat in a cacao pulp juice before lyophilization.

15. The method according to claim 14, wherein a cocoa powder is added as the dietary fiber and the oil or fat.
